Europäisches Patentamt

European Patent Office

Office européen des brevets

(11) Publication number: **0 457 914 A1**

# EUROPEAN PATENT APPLICATION
## published in accordance with Art. 158(3) EPC

(21) Application number: 91900048.9

(51) Int. Cl.5: **B25J 9/10**

(22) Date of filing: 07.12.90

(86) International application number:
**PCT/JP90/01606**

(87) International publication number:
**WO 91/08868 (27.06.91 91/14)**

(30) Priority: 12.12.89 JP 322111/89

(43) Date of publication of application:
27.11.91 Bulletin 91/48

(84) Designated Contracting States:
**DE FR GB**

(71) Applicant: **FANUC LTD.**
**3580, Shibokusa Aza-Komanba Oshinomura**
**Minamitsuru-gun, Yamanashi 401-05(JP)**

(72) Inventor: **TORII, Nobutoshi Fuyo Haitsu 308**
**65-4, Takakuramachi**
**Hachioji-shi Tokyo 192(JP)**
Inventor: **IWATA, Yoshiharu Fanuc Mansion**

Harimomi 4-205
**3526, Shibokusa Oshinomura**
**Minamitsuru-gun Yamanashi 401-05(JP)**
Inventor: **ISHIKAWA, Haruyuki 25, Daikyocho**
**Shinjuku-ku**
**Tokyo 160(JP)**
Inventor: **OZAKI, Hitoshi Fanuc Dai-2**
**Vira-karamatsu**
**3528, Shibokusa Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) DATA CONVERSION SYSTEM OF A MEASURING ROBOT.

(57) A data conversion system of a measuring robot which measures the measuring points by controlling a robot that has a measuring sensor attached to the wrist thereof and converts the measured data into data on a work coordinate system. Angle data ($\theta x$, $\theta y$, $\theta z$) relative to the work coordinate system of the tool coordinate system secured to the wrist at a measuring point (P1) are input to a measurement control computer (30). The measuring data (33) read through the sensor (40) are converted into data of the work coordinate system using a coordinate conversion matrix (32) found from the angle data. This makes it possible to simply obtain measured data on the work coordinate system even on a plane that is inclined on the work coordinate system.

FIG. 1

Technical Field

The present invention relates to a method of converting measuring robot data, and more particularly, to a method of converting measuring robot data by which measurement data on a work coordinate system can be easily obtained even if a measuring point is located on a slanted surface of the work coordinate system.

Background Art

Robots are extensively used for welding processes and the like in automobile manufacturing lines, and are now used also for measuring processes. A measuring robot is usually provided with a measuring sensor, on the wrist thereof, which is placed at a measuring point to measure the position of that point according to the aforementioned measurement data, and system using such a robot is called a measuring robot.

When measuring a general object, the measurement is performed on a surface which is parallel to each axis of a work coordinate system. In this case, the work coordinate system is parallel to the coordinate system of the robot's wrist, i.e., the coordinate system of the tool, and therefore, the measurement data, can be directly used as the data of the work coordinate system.

If a measurement, however, is performed on a plane surface which is slanted in relation to the work coordinate system, then the tool coordinate system is no longer parallel to the work coordinate system because the robot's wrist is positioned perpendicularly to the slanted plane surface, and as a result, the measurement data cannot be used as the data of the work coordinate system.

Accordingly, the conventional measurement is possible only on a surface which is parallel to the work coordinate system. In some cases, measurement data obtained on a plane surface which is nearly parallel to the work coordinate system is directly used, but in such a case the measuring is unavoidably inaccurate.

Disclosure of the Invention

The object of the present invention is to solve the above problem and provide a data conversion method of a measuring robot, by which measuring data on a work coordinate system can be easily obtained even if a measuring point is located on a slanted surface on the work coordinate system.

To solve the aforementioned problem, the present invention provides a measuring robot data conversion method of measuring a measuring point by controlling a robot having a measuring sensor on the wrist thereof and then converting the measurement data into data on the work coordinate system; angle data on the tool coordinate system fixed on said wrist at said measuring point, which corresponds to the angle data on the work coordinate system, being supplied to a measurement control computer at which the measurement data read through said sensor is converted to data on the work coordinate system according to said angle data.

When measuring point on a surface slanted to the work coordinate system is measured, the robot's wrist is positioned perpendicularly to the slanted surface to perform the measurement. The angle of the wrist at that time, i.e., the tilt angle of the tool coordinate system with respect to the work coordinate system is input to the measuring control computer, and the measuring control computer converts the tool coordinate measurement data at that angle into corresponding work coordinate system data, and thus measurement data on the work coordinate system can be easily obtained even on a slanted surface of the work coordinate system.

Brief Description of the Drawings

FIG. 1 is a conceptual diagram of a method of converting measuring robot data according to the present invention;

FIG. 2 illustrates a configuration of one embodiment of the present invention for measuring a car body;

FIG. 3(a) is a front view of a measuring sensor;

FIG. 3(b) is a side view of FIG. 3(a); and

FIG. 4 is a flowchart of the processing procedure of the method of converting measuring robot data according to the present invention.

Best Mode of Carrying Out of the Invention

One embodiment of the present invention will now be described with reference to the drawings.

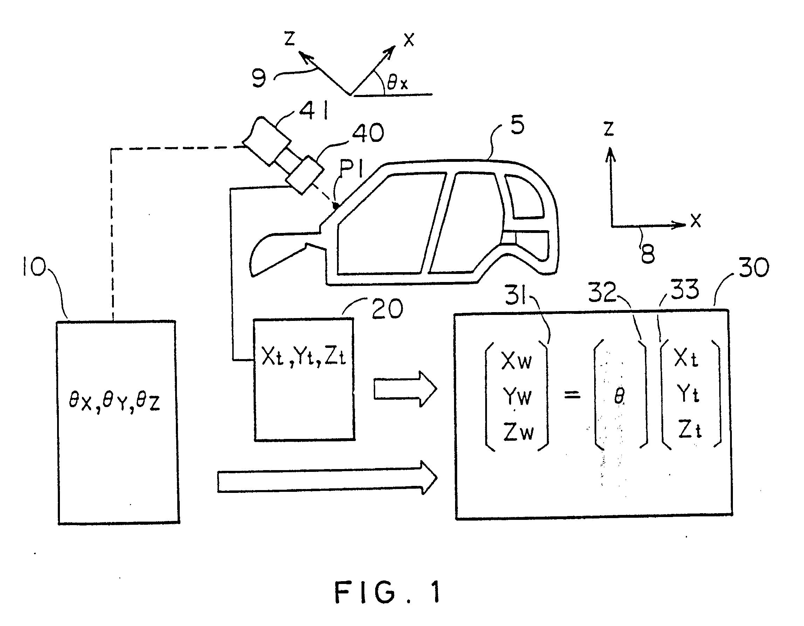

FIG. 1 is a conceptual diagram of the method of converting measuring robot data according to the present invention. A robot control unit 10 positions a wrist 41 so that the wrist becomes perpendicular to a measuring point P1 of an object 5 to be measured; a measuring sensor 40 or the like is fixed on the end of the wrist 41.

The position of the measuring point P1 is measured by the measuring sensor 40, and usually, a discrepancy of an actually processed point from a predetermined accurate point is measured. Such measurement data (Xt, Yt and Zt) is read through a visual control unit 20 before being sent to a measurement control computer 30.

The robot control unit 10 sends the data on the wrist tilt, i.e., the tilt angle data ($\theta x$, $\theta y$, $\theta z$)on a tool coordinate system 9, to the measurement control computer 30, which then generates a coordinate conversion matrix 32 from the angle data to convert measurement data 33 through the coordinate conversion matrix into data 31 on a work coordinate system 8, whereby the necessary data 31 on the work coordinate system 8 is obtained.

In the description above, the angle data is sent from the robot control unit 10 to the measurement control computer 30, but it is also possible for an operator to read angle data through a teaching control device to be discussed later, and to supply the data to the measurement control computer 30.

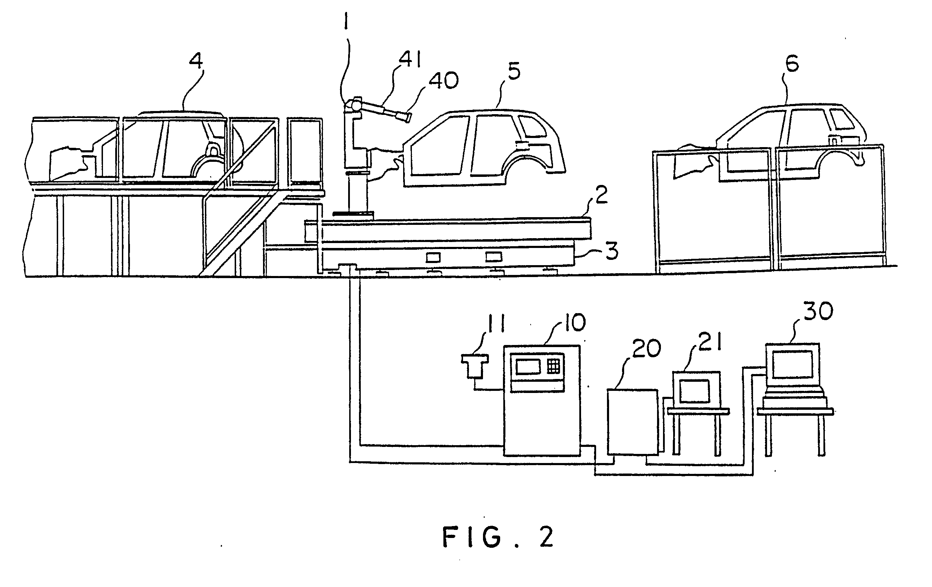

FIG. 2 shows a configuration of one embodiment according to the present invention. This configuration is used for measuring car bodies. The robot 1 is a measuring robot which can move laterally on a frame 2 mounted on a stand 3, and car bodies 4, 5 and 6 are shifted to the right as they are measured. Note, the stand and the like for the bodies 4, 5 and 6 are omitted from the drawing. A camera 43 or the like is fixed on a wrist 41 of the robot 1; the details of which will be discussed later. The robot 1 is controlled by the robot control unit 10, and the robot control unit 10 stores the data on the wrist position and angle in a memory, and sends the data to the measurement control computer 30. The robot control unit 10 is provided with a teaching control device 11 through which an operator can read wrist angle data, as necessary, and send the data to the measurement control computer 30.

The visual control unit 20 received a position signal of a two-dimensional measuring point, from a visual image of the camera 43, to calculate a two-dimensional position. In this case, a position on the XY plane of the tool coordinate system is determined. Also, a position in the direction Z on the tool coordinate system is measured by a laser length measuring instrument, not illustrated, and the measurement result is sent directly to the measurement control computer 30 . A monitoring unit 21 for monitoring a measuring point is connected to the visual control unit 20. As previously described, the measurement control computer 30 converts the angle data received from the robot control unit 10 and the measurement data received from the visual control unit 20, etc. into data on the work coordinate system, and stores the converted data in an internal memory. This data is used as measurement data for quality control or the like.

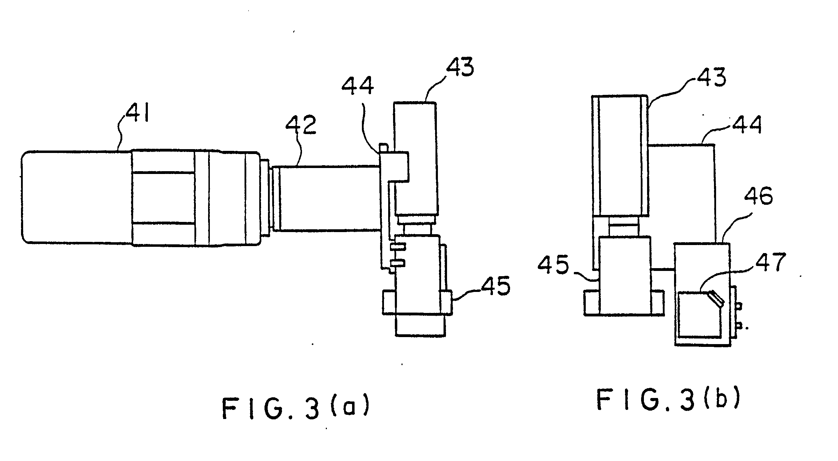

FIG. 3(a) is the front view of the measuring sensor, and FIG. 3(b) is a side view of FIG. 3(a). The camera 43 and a lens 45 are mounted on the robot's wrist 41 through components 42 and 44. An image of a measuring point is road through the camera 43, and a position on the XY plane of the tool coordinate system is measured. A laser measuring instrument 47 is fixed on the component 44 through a component 46, and the laser measuring instrument measures a position in the Z-axis direction on the tool coordinate system.

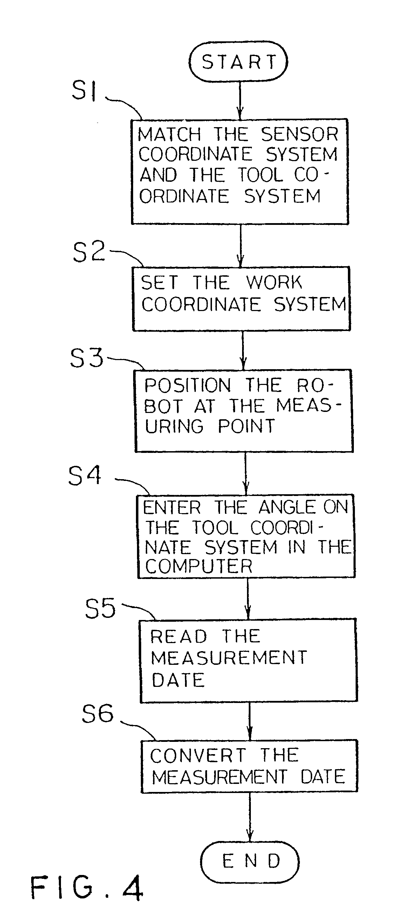

FIG. 4 shows a flowchart of the processing of the method of converting measuring robot data according to the present invention. In the figure, the numbers following S indicate the step numbers.

[S1] A sensor coordinate system and the tool coordinate system in the robot control unit 10 are matched.

[S2] The work coordinate to system is set in the robot control unit 10.

[S3] The robot 1 is positioned at a measuring point.

[S4] The angle data on the tool coordinate system is sent from the robot control unit 10 to the measurement control computer 30. Then, as necessary, an operator reads the angle data through the teaching control device 11 and sends it to the measurement control computer 30.

[S5] The visual control unit 20 converts measurement signal from the measuring sensor to digital data, and sends measurement data of the tool coordinate system to the measurement control computer 30. A distance signal in the Z-axis direction received from the laser length measuring instrument 47 is sent directly to the measurement control computer 30.

[S6] The measurement control computer 30 converts the measurement data into data on the work coordinate system according to the angle data. The data is stored in the memory before being printed out, as necessary, through the measurement control computer 30, or is used as quality control data.

In the above description, the present invention is used for car bodies, but the invention can be applied in a similar way to other objects.

As described above, according to the present invention, measurement data on the tool coordinate system is converted according to angle data on the tool coordinate system, permitting a measurement to be made as easily as making a conventional measurement, even on a slanted surface of the work coordinate system.

## Claims

1. A method of converting measuring robot data, in which a measuring point is measured on a tool coordinate system by controlling a robot with a measuring sensor installed on a wrist thereof, and the measurement data is converted into data on a work coordinate system, the method being characterized in that

angle data of the tool coordinate system fixed on said wrist at said measuring point, which corresponds to the angle data on the work coordinate system, is supplied to a measurement control computer, and

the measurement data read through said measuring sensor is converted to data on the work coordinate system according to said angle data.

2. A method of converting measuring robot data according to claim 1, wherein said measuring sensor comprises a visual sensor for measuring two-dimensional data of a measuring point and a distance sensor for measuring a distance perpendicular to said two-dimensional data.

3. A method of converting measuring robot data ac cording to claim 1, wherein said angle data is sent from a robot control unit to said measurement control computer each time said robot reaches said measuring point.

4. A method of converting measuring robot data according to claim 1, wherein an operator reads said angle data through a teaching control device and manually inputs said data to said measurement control computer.

FIG. 1

$$\begin{pmatrix} X_t \\ Y_t \\ Z_t \end{pmatrix} = \theta \begin{pmatrix} X_w \\ Y_w \\ Z_w \end{pmatrix}$$

$X_t, Y_t, Z_t$

$\theta x, \theta y, \theta z$

FIG. 2

EP 0 457 914 A1

FIG.3(b)

FIG.3(a)

```
                    ┌─────────┐
                    │  START  │
                    └────┬────┘
                         │
S1 ┌─────────────────────▼──────────────┐
   │  MATCH THE SENSOR                   │
   │  COORDINATE SYSTEM                  │
   │  AND THE TOOL CO-                   │
   │  ORDINATE SYSTEM                    │
   └─────────────────────┬──────────────┘
                         │
S2 ┌─────────────────────▼──────────────┐
   │  SET THE WORK                       │
   │  COORDINATE SYSTEM                  │
   └─────────────────────┬──────────────┘
                         │
S3 ┌─────────────────────▼──────────────┐
   │  POSITION THE RO-                   │
   │  BOT AT THE MEAS-                   │
   │  URING POINT                        │
   └─────────────────────┬──────────────┘
                         │
S4 ┌─────────────────────▼──────────────┐
   │  ENTER THE ANGLE ON                 │
   │  THE TOOL COORDI-                   │
   │  NATE SYSTEM IN THE                 │
   │  COMPUTER                           │
   └─────────────────────┬──────────────┘
                         │
S5 ┌─────────────────────▼──────────────┐
   │  READ THE                           │
   │  MEASUREMENT                        │
   │  DATE                               │
   └─────────────────────┬──────────────┘
                         │
S6 ┌─────────────────────▼──────────────┐
   │  CONVERT THE                        │
   │  MEASUREMENT DATE                   │
   └─────────────────────┬──────────────┘
                         │
                    ┌────▼────┐
                    │  E N D  │
                    └─────────┘
```

# FIG. 4

# INTERNATIONAL SEARCH REPORT

International Application No  PCT/JP90/01606

**I. CLASSIFICATION OF SUBJECT MATTER** (if several classification symbols apply, indicate all) *

According to International Patent Classification (IPC) or to both National Classification and IPC

Int. Cl$^5$  B25J9/10

**II. FIELDS SEARCHED**

| Minimum Documentation Searched ? | |
|---|---|
| Classification System | Classification Symbols |
| IPC | B25J9/22, 13/08, 19/04 |

Documentation Searched other than Minimum Documentation
to the Extent that such Documents are Included in the Fields Searched *

| | |
|---|---|
| Jitsuyo Shinan Koho | 1926 – 1990 |
| Kokai Jitsuyo Shinan Koho | 1971 – 1990 |

**III. DOCUMENTS CONSIDERED TO BE RELEVANT** *

| Category * | Citation of Document, ¹¹ with indication, where appropriate, of the relevant passages ¹² | Relevant to Claim No. ¹³ |
|---|---|---|
| Y | JP, A, 60-263681 (Hitachi, Ltd.), December 27, 1985 (27. 12. 85), & US, A, 4712970 | 1-4 |
| Y | JP, A, 60-262216 (Hitachi, Ltd.), December 25, 1985 (25. 12. 85), (Family: none) | 1-4 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 20, 1991 (20. 02. 91) | March 4, 1991 (04. 03. 91) |
| International Searching Authority | Signature of Authorized Officer |
| Japanese Patent Office | |